# EUROPÄISCHE PATENTSCHRIFT

(11) **EP 2 908 016 B1**
(45) Veröffentlichungstag und Bekanntmachung des Hinweises auf die Patenterteilung: **28.06.2017**
(21) Anmeldenummer: 14154969.1
(22) Anmeldetag: 13.02.2014
(51) Int. Cl.: F16B 13/12

(54) **Mehrteiliger Spreizdorn zum Spreizen eines Kunststoffdübels**
Multi-part expanding mandrel for expanding a plastic dowel
Mandrin d'expansion à plusieurs parties pour l'expansion d'une cheville en matière synthétique

(43) Veröffentlichungstag der Anmeldung: 19.08.2015
(73) Patentinhaber: HILTI Aktiengesellschaft, 9494 Schaan (LI)
(72) Erfinder: Rosenkranz, Falk, 9658 Wildhaus (CH); Boeckle, Juergen, 9494 Schaan (LI); Brunhuber, Thomas, 6811 Göfis (AT); Turski, Martin, 8880 Walenstadt (CH)
(74) Vertreter: Hilti Aktiengesellschaft Corporate Intellectual Property

(56) Entgegenhaltungen:
- DE-U1- 29 720 745

## Beschreibung

Die Erfindung betrifft einen Spreizdorn zum Spreizen eines Kunststoffdübels, insbesondere eines Kunststoffdübels zum Befestigen von Dämmstoffplatten an einem Bohrloch, gemäss dem Oberbegriff des Anspruchs 1. Ein solcher Spreizdorn ist ausgestattet mit einem Schaftelement und einem Spitzenelement, welches aus einem anderen Material besteht als das Schaftelement, und welches im, insbesondere unmittelbaren, Anschluss an sein rückwärtiges Ende ein längliches Ankerteil aufweist, welches im Schaftelement eingebettet ist.

Ein solcher Spreizdorn wird von der Firma fischerwerke GmbH & Co. KG im Zusammenhang mit dem Produkt "Schlagdübel Termoz CN 8" vertrieben. Bei diesem bekannten Spreizdorn ist das Ankerteil als profilierter, nämlich gerändelter, Zylinder ausgebildet.

Ein Spreizdorn für Dämmstoffdübel mit einer Spitze aus Metall, die von einem Schaft aus Kunststoff bereichsweise umspritzt ist, ist beispielsweise aus der EP 2549127 A2 bekannt.

Weitere mehrteilige Spreizdorne für Dämmstoffdübel gehen aus der EP 0765979 A1 hervor. Die GB 2268992 A1 beschreibt einen Nagel mit einem Kunststoffkopf.

Die DE 297 20 745 U1 zeigt einen Dübel mit einer Hülse und einem in die Hülse einschlagbaren Metallspreizstift, wobei der Metallspreizstift kürzer als die Hülse ist und ein zusätzlicher, in die Hülse einschlagbarer, den Metallstift beaufschlagender Kunststoffvortriebskörper vorgesehen ist. Unter anderem schlägt die DE 297 20 745 U1 vor, den Metallspreizstift und den Kunststoffvortriebskörper zu verrasten. Zu diesem Zweck kann am Spreizstift eine Mehrfachhinterstechung vorgesehen sein und am Kunststoffvortriebskörper eine korrespondierende Mehrfachnut.

Aufgabe der Erfindung ist es, einen Spreizdorn zum Spreizen eines Kunststoffdübels anzugeben, der bei geringem Material- und Herstellungsaufwand eine besonders hohe Tragfähigkeit und Zuverlässigkeit aufweist.

Die Aufgabe wird erfindungsgemäss durch einen Spreizdorn mit den Merkmalen des Anspruchs 1 gelöst. Bevorzugte Ausführungsformen sind in den abhängigen Ansprüchen angegeben.

Ein erfindungsgemässer Spreizdorn ist dadurch gekennzeichnet, dass der Querschnitt des länglichen Ankerteils entlang der gesamten Länge des Ankerteils entlang dem länglichen Ankerteil zum rückwärtigen Ende des Spitzenelements hin abnimmt, so dass das Spitzenelement zu seinem rückwärtigen Ende hin mit einer Querschnittsverjüngung ausläuft.

Die Erfindung hat erkannt, dass sich bei bekannten zylindrisch ausgestalteten Ankerteilen eine ausgeprägte Spannungsspitze im Schaftelement ausbilden kann, wenn in axialer Richtungen Lasten, insbesondere Zuglasten wirken. Diese Spannungsspitze kann aus der markanten Reduktion des Querschnitts im Schaftelement und auch aus Kerbwirkungen im Bereich des Übergangs zwischen Schaftelement und Spitzenelement resultieren. Die Erfindung hat weiterhin erkannt, dass diese Spannungsspitze häufig nicht einfach durch eine Erhöhung der Materialstärke kompensiert werden kann. Denn in radialer Richtung ist der Bauraum für die Spreizdorne häufig eingeschränkt, da Kunststoffdübel, insbesondere Wärmedämmverbundsystem-Dübel, für welche die Spreizdorne vorgesehen sind, im fraglichen Bereich häufig nicht einfach dicker ausgeführt werden können. Daher kann die die Querschnittsreduktion am rückwärtigen Ende eines zylindrisch ausgestalteten Ankerteils die Tragfähigkeit der Verbindung reduzieren.

Hier setzt die Erfindung an und sieht vor, das Spitzenelement entlang des Ankerteils zum rückwärtigen Ende des Spitzenelements mit einer Verjüngung auslaufen zu lassen, das heisst das Ankerteil kegelstumpfähnlich auszubilden. Die Erfindung hat erkannt, dass durch diese herstellungstechnisch einfach umzusetzende Massnahme die beobachtete unerwünschte Spannungsspitze am rückwärtigen Ende des Spitzenelements deutlich reduziert werden kann, da der Spannungsquerschnitt entlang des Ankerteils erhöht ist. Folglich ist in besonders einfacher Weise eine besonders hohe Tragfähigkeit und Zuverlässigkeit gegeben.

Soweit hier von der Radialrichtung, Axialrichtung oder Umfangsrichtung die Rede ist, soll sich dies insbesondere auf die Längsachse des Spreizdorns beziehen, die vorzugsweise mit der Längsachse des Kunststoffdübels zusammenfallen kann. Erfindungsgemäss weist das Spitzenelement im Bereich seines dem rückwärtigen Ende entgegengesetzten vorderen Endes ein Spreizteil zum Spreizen des Kunststoffdübels auf, das zumindest bereichsweise aus dem Schaftelement vorsteht.

Das Spitzenelement ist bereichsweise im Schaftelement eingebettet, und zwar erfindungsgemäss zumindest mit seinem Ankerteil. Zudem können vorzugsweise auch an das Ankerteil angrenzende Bereiche des Spitzenelements im Schaftelement eingebettet sein. Das Spitzenelement steht aber an seiner Vorderseite, am Spreizteil, aus dem Schaftelement hervor, das heisst das Spitzenelement ist lediglich bereichsweise im Schaftelement eingebettet.

Besonders bevorzugt ist es, dass das Ankerteil kegelstumpfförmig ausgestaltet ist. Hierdurch kann eine besonders symmetrische Krafteinleitung realisiert werden, was die Lastwerte noch weiter verbessern kann.

Zweckmässigerweise kann das Ankerteil eine Oberflächenprofilierung, beispielsweise eine Rändelung, aufweisen. Hierdurch kann die Kraftübertragung noch weiter verbessert werden. Vorzugsweise weist das Ankerteil eine höhere Oberflächenrauigkeit auf als der vorderseitig an das Ankerteil anschliessende Bereich des Spitzenelements. Hierdurch kann die Kraftübertragung gezielt auf das Ankerteil konzentriert werden, was dem Auftreten von Spannungsspitzen andernorts entgegenwirken kann und somit die Freiheit bei der Bemessung des Spreizdorns erhöht. Sofern vorhanden kann das Ankerteil auch eine höhere Oberflächenrauigkeit aufweisen als der rückseitig an das Ankerteil anschliessende Bereich des Spitzenelements.

Weiterhin kann in vorteilhafter Weise vorgesehen sein, dass die Länge des Ankerteils mindestens das Doppelte, vorzugsweise mindestens das Dreifache, des maximalen Durchmessers des Spitzenelements beträgt. Gemäss dieser Ausführungsform erfolgt die Querschnittsabnahme über eine relativ grosse Länge. Mit anderen Worten ist der Öffnungswinkel des Ankerelements relativ klein. Dies kann sich vorteilhaft auf die Spannungsverteilung auswirken und die Lastwerte weiter verbessern.

Eine weitere geeignete Ausgestaltung der Erfindung liegt darin, dass das Spitzenelement im Anschluss an das Ankerteil einen Hals aufweist, der eine Einschnürung bildet. Sofern dieser Hals im Schaftelement eingebettet ist, kann er eine zusätzliche, formschlüssige Sicherung des Spitzenelements im Schaftelement bilden.

Vorzugsweise kann das Schaftelement aus Kunststoff, insbesondere aus faserverstärktem Kunststoff, und/oder das Spitzenelement aus Metall bestehen. Das Spitzenelement ist zweckmässigerweise vom Schaftelement aus Kunststoff, insbesondere aus faserverstärktem Kunststoff, umspritzt. Beispielsweise kann das Schaftelement aus Polyamid 6 mit 50 % Glasfaser bestehen.

Die Erfindung betrifft auch eine Befestigungsvorrichtung bestehend aus einem Kunststoffdübel und einem erfindungsgemässen Spreizdorn, wobei der Kunststoffdübel einen Spreizkanal aufweist und durch Einführen des Spreizdorns in den Spreizkanal aufspreizbar ist. Somit umfasst die Erfindung auch den Spreizdorn in Kombination mit dem Kunststoffdübel, für den er vorgesehen ist. Insbesondere kann der Spreizdorn in den Spreizkanal des Kunststoffdübels eingeführt sein, wobei das Spreizteil des Spreizdorns den Spreizbereich des Kunststoffdübels aufspreizt. Der Kunststoffdübel kann insbesondere ein Dämmstoffdübel sein.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine längsgeschnittene Ansicht einer Ausführungsform eines erfindungsgemässen Spreizdorns;
- Figur 2:: eine Detailansicht X des Spreizdorns aus Figur 1 im Bereich des Übergangs zwischen Schaftelement und Spitzenelement; und
- Figur 3:: eine längsgeschnittene Ansicht einer Ausführungsform eines Dämmstoffdübels, der mit einem erfindungsgemässen Spreizdorn aufspreizbar ist.

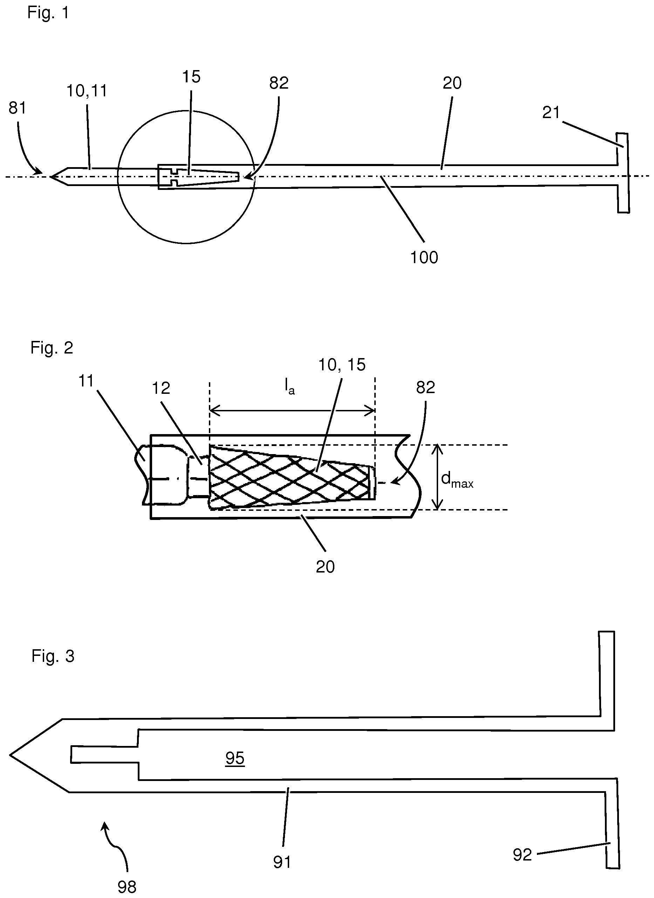

Ein Ausführungsbeispiel eines erfindungsgemässen Spreizdorns ist in den Figuren 1 und 2 dargestellt. Der Spreizdorn weist in seinem rückwärtigen Bereich ein längliches Schaftelement 20 auf, welches aus einem, vorzugsweise faserverstärkten, Kunststoffmaterial besteht. An seinem rückwärtigen Ende ist am Schaftelement ein Kopf 21 angeformt, der eine lokale Querschnittserhöhung bildet.

In seinem vorderen Bereich weist der Spreizdorn ein Spitzenelement 10 aus Metall, vorzugsweise aus Stahl auf. Das Spitzenelement 10 ist im Bereich des rückwärtigen Endes 82 des Spitzenelements 10 vom Schaftelement 20 umspritzt und somit bereichsweise im Schaftelement 20 eingebettet. Im Bereich seines vorderen Endes 81 steht das Spitzenelement 10 aus dem Schaftelement 20 vor und weist dort ein Spreizteil 11 zum radialen Aufspreizen eines Kunststoffdübels auf.

Das Spitzenelement 10 und das Schaftelement 20 erstrecken sich entlang der Längsachse 100 des Spreizdorns und sind vorzugsweise koaxial mit der Längsachse 100 angeordnet.

Im Bereich seines rückwärtigen Endes 82 weist das Spitzenelement 10 ein längliches Ankerteil 15 auf. Dieses Ankerteil 15 ist vollständig im Schaftelement 20 eingebettet. Zwischen dem Spreizteil 11 und dem Ankerteil 15 weist das Spitzenelement 10 einen Hals 12 auf, der eine Querschnittseinschnürung bildet.

Erfindungsgemäss nimmt der Querschnitt des Ankerteils 15 des Spitzenelements 10 entlang der gesamten Länge des Ankerteils 15 zum rückwärtigen Ende 82 des Spitzenelements 10 ab. Da sich das Ankerteil 15 unmittelbar an das hintere Ende 82 des Spitzenelements 10 anschliesst, läuft das Spitzenelement 10 an seinem rückwärtigen Ende 82 mit einer Verjüngung aus. Vorzugsweise ist das Ankerteil 15 zumindest annähernd kegelstumpfförmig ausgebildet. Durch diese Ausgestaltung werden Spannungsspitzen am Übergang zwischen dem Spitzenelement 10 und dem Schaftelement 20 reduziert. Vorzugsweise beträgt die Länge lₐ des Ankerteils 15, entlang der sich der Querschnitt des Spitzenelements 10 verjüngt, mindestens das Doppelte, besonders bevorzugt mindestens das Dreifache des maximalen Durchmessers dₘₐₓ des Spitzenelements 10, was weiter zur Verringerung von Spannungsspitzen beiträgt.

Das Ankerteil 15 ist beispielhaft mit einer bereichsweisen Oberflächenprofilierung, beispielsweise einer Rändelung, dargestellt. Diese Oberflächenprofilierung kann die Querschnittsverjüngung des Ankerteils 15 auch lokal überlagern. Wie insbesondere Figur 2 zeigt, sind auch der Hals 12 und/oder vorzugsweise auch ein rückwärtiger Endbereich des Spreizteils 11 im Schaftelement 20 eingebettet.

Figur 3 zeigt ein Ausführungsbeispiel eines Kunststoffdübels, der mittels eines erfindungsgemässen Spreizdorns zum Fixieren in einem Bohrloch radial aufspreizbar ist. Der Kunststoffdübel ist als Dämmstoffdübel ausgebildet und weist als solcher einen Schaft 91 auf, an dessen rückwärtigen Ende ein Halteteller 92 zum Sichern einer Dämmstoffplatte am Schaft 91 angeordnet ist. Längs durch den Schaft 91 hindurch erstreckt sich im Schaftinneren ein Spreizkanal 95, welcher zum rückwärtigen Ende des Kunststoffdübels hin offen ist.

Der Schaft 91 weist im Anschluss an sein vorderes Ende einen Spreizbereich 98 auf. Auf Höhe des Spreizbereichs 98 ist der Spreizkanal 95 zumindest abschnittsweise querschnittsverengt. Der Spreizbereich 98 des Schafts 91 ist durch Einführen eines erfindungsgemässen Spreizdorns in den Spreizkanal 95 bis zu einer Tiefe, bei der das Spreizteil 11 des Spreizdorns in den Spreizbereich 98 hinein gelangt, radial aufweitbar, wodurch der Kunststoffdübel an einer Bohrlochwand verankerbar ist.

## Patentansprüche

1. Spreizdorn zum Spreizen eines Kunststoffdübels, mit
- einem Schaftelement (20) und
- einem Spitzenelement (10), welches aus einem anderen Material besteht als das Schaftelement (20), und welches im Anschluss an sein rückwärtiges Ende (82) ein längliches Ankerteil (15) aufweist, welches im Schaftelement (20) eingebettet ist,
**dadurch gekennzeichnet,**
**dass** der Querschnitt des länglichen Ankerteils (15) entlang der gesamten Länge des Ankerteils (15) entlang dem länglichen Ankerteil (15) zum rückwärtigen Ende (82) des Spitzenelements (10) hin abnimmt, so dass das Spitzenelement (10) zu seinem rückwärtigen Ende (82) hin mit einer Querschnittsverjüngung ausläuft.

2. Spreizdorn nach Anspruch 1,
**dadurch gekennzeichnet,**
**dass** das Ankerteil (15) kegelstumpfförmig ausgestaltet ist.

3. Spreizdorn nach einem der vorstehenden Ansprüche,
**dadurch gekennzeichnet,**
**dass** das Ankerteil (15) eine Oberflächenprofilierung aufweist.

4. Spreizdorn nach einem der vorstehenden Ansprüche,
**dadurch gekennzeichnet,**
**dass** die Länge (lₐ) des Ankerteils (15) mindestens das Doppelte des maximalen Durchmessers (dₘₐₓ) des Spitzenelements (10) beträgt.

5. Spreizdorn nach einem der vorstehenden Ansprüche,
**dadurch gekennzeichnet,**
**dass** das Spitzenelement (10) im Anschluss an das Ankerteil (15) einen Hals (12) aufweist, der eine Einschnürung bildet.

6. Spreizdorn nach einem der vorstehenden Ansprüche,
**dadurch gekennzeichnet,**
**dass** das Schaftelement (20) aus faserverstärktem Kunststoff und das Spitzenelement (10) aus Metall besteht.

7. Befestigungsvorrichtung bestehend aus einem Kunststoffdübel und einem Spreizdorn nach einem der vorstehenden Ansprüche, wobei der Kunststoffdübel einen Spreizkanal (95) aufweist und durch Einführen des Spreizdorns in den Spreizkanal (95) aufspreizbar ist.

## Claims

1. Expanding mandrel for expanding a plastics dowel, comprising
- a shaft element (20) and
- a tip element (10) which is made of a different material to that of the shaft element (20) and has extending from its rearward end (82) an elongated anchor portion (15) which is embedded in the shaft element (20),
**characterised in that**
the cross section of the elongated anchor portion (15) decreases along the full length of the anchor portion (15) along the elongated anchor portion (15) to the rearward end (82) of the tip element (10), so that the tip element (10) ends with a tapering cross section towards its rearward end (82).

2. Expanding mandrel according to Claim 1,
**characterised in that**
the anchor portion (15) has a frustoconical configuration.

3. Expanding mandrel according to either of the preceding claims,
**characterised in that**
the anchor portion (15) has a surface profiling.

4. Expanding mandrel according to any one of the preceding claims,
**characterised in that**
the length (lₐ) of the anchor portion (15) is at least twice the maximum diameter (dₘₐₓ) of the tip element (10).

5. Expanding mandrel according to any one of the preceding claims,
**characterised in that**
the tip element (10) has, adjoining the anchor portion (15), a neck (12) forming a narrowed section.

6. Expanding mandrel according to any one of the preceding claims,
**characterised in that**
the shaft element (20) is made of fibre-reinforced plastics material and the tip element (10) is made of metal.

7. Fastening device consisting of a plastics dowel and an expanding mandrel according to any one of the preceding claims, wherein the plastics dowel has an expansion channel (95) and can be expanded by insertion of the expanding mandrel into the expansion channel (95).

## Revendications

1. Mandrin d'écartement destiné à écarter une cheville en matière plastique, comportant :
- un élément de tige (20) et
- un élément à pointe (10) qui est constitué d'un matériau différent de l'élément de tige (20) et qui comporte une partie d'ancrage longitudinale (15) à la suite de son extrémité arrière (82), laquelle partie d'ancrage est encastrée dans l'élément de tige (20),
**caractérisé en ce que**
la section transversale de la partie d'ancrage longitudinale (15) diminue le long de toute la longueur de la partie d'ancrage (15) le long de la partie d'ancrage longitudinale (15) jusqu'à l'extrémité arrière (82) de l'élément à pointe (10), de sorte que l'élément à pointe (10) se termine à son extrémité arrière (82) par un rétrécissement de section transversale.

2. Mandrin d'écartement selon la revendication 1,
**caractérisé en ce que**
la partie d'ancrage (15) est configurée en forme de cône tronqué.

3. Mandrin d'écartement selon l'une des revendications précédentes,
**caractérisé en ce que** la partie d'ancrage (15) comporte un profilage de surface.

4. Mandrin d'écartement selon l'une des revendications précédentes,
**caractérisé en ce que**
la longueur (lₐ) de la partie d'ancrage (15) est au moins égale au double du diamètre maximal (dₘₐₓ) de l'élément à pointe (10).

5. Mandrin d'écartement selon l'une des revendications précédentes,
**caractérisé en ce que**
l'élément à pointe (10) comporte un col (12) à la suite de la partie d'ancrage (15) qui forme une gorge.

6. Mandrin d'écartement selon l'une des revendications précédentes,
**caractérisé en ce que**
l'élément de tige (20) est constitué de matière plastique renforcée par des fibres et l'élément à pointe (10) est constitué de métal.

7. Dispositif de fixation constitué d'une cheville en matière plastique et d'un mandrin d'écartement selon l'une des revendications précédentes, dans lequel la cheville en matière plastique comporte un canal d'écartement (95) et peut s'écarter en insérant le mandrin d'écartement dans le canal d'écartement (95).
